# EUROPÄISCHE PATENTSCHRIFT

(11) **EP 1 135 329 B1**
(45) Veröffentlichungstag und Bekanntmachung des Hinweises auf die Patenterteilung: **17.09.2003**
(21) Anmeldenummer: 99953785.5
(22) Anmeldetag: 12.10.1999
(51) Int. Cl.: C01B 31/28, C08G 64/22, C08G 63/64

(54) **VERFAHREN ZUR HERSTELLUNG VON TETRACHLORKOHLENSTOFFARMEN PHOSGEN**
METHOD OF MANUFACTURING PHOSGENE WITH POOR CARBON TETRACHLORIDE CONTENT
PROCEDE POUR LA PREPARATION DE PHOSGENE PAUVRE EN TETRACHLORURE DE CARBONE

(30) Priorität: 22.10.1998 DE 19848668
(43) Veröffentlichungstag der Anmeldung: 26.09.2001
(73) Patentinhaber: BAYER AG, 51368 Leverkusen (DE)
(72) Erfinder: HEUSER, Jürgen, D-47803 Krefeld (DE); KAUTH, Hermann, D-47829 Krefeld (DE); KORDS, Christian, D-47829 Krefeld (DE)
(86) Internationale Anmeldenummer: EP9907654
(87) Internationale Veröffentlichungsnummer: WO00024672

(56) Entgegenhaltungen:
- EP-A- 0 251 586
- EP-A- 0 796 819
- EP-A- 0 846 713
- WO-A-97/30932
- WO-A-98/00364
- WO-A-98/28227
- DE-A- 3 327 274
- GB-A- 2 032 406
- PATENT ABSTRACTS OF JAPAN vol. 1997, no. 07, 31. Juli 1997 (1997-07-31) & JP 09 059012 A (MITSUBISHI GAS CHEM CO INC), 4. März 1997 (1997-03-04)
- DATABASE WPI Section Ch, Week 199543 Derwent Publications Ltd., London, GB; Class A23, AN 1995-332595 XP002125361 & JP 07 228679 A (MITSUI TOATSU CHEM INC), 29. August 1995 (1995-08-29)
- DATABASE WPI Section Ch, Week 199008 Derwent Publications Ltd., London, GB; Class A41, AN 1990-054036 XP002022018 & JP 02 006307 A (IDEMITSU PETROCHEM CO), 10. Januar 1990 (1990-01-10)
- DATABASE WPI Section Ch, Week 199509 Derwent Publications Ltd., London, GB; Class A17, AN 1995-063680 XP002125362 & JP 06 340408 A (TEIJIN KASEI LTD), 13. Dezember 1994 (1994-12-13)

## Beschreibung

Die Erfindung betrifft ein verfahren zur Herstellung von tetrachlorkohlenstoffarmen Phosgen.

Phosgen ist ein wichtiges Ausgangsmaterial zur Herstellung von Zwischenprodukten und Endprodukten in vielen Zweigen der Chemie, insbesondere bei der Herstellung von Isocyanaten, Polycarbonatkunststoffen und Chlorameisensäureestern. Reines Phosgen ist ein farbloses, hydrolyseempfindliches, toxisches Gas, das unter Normaldruck bei -127,8°C siedet und bei 7,56°C zu einer farblosen Flüssigkeit kondensiert.

Es ist bekannt, Phosgen durch katalytische Vereinigung von Kohlenmonoxid (CO) und elementarem Chlor (Cl₂) herzustellen:

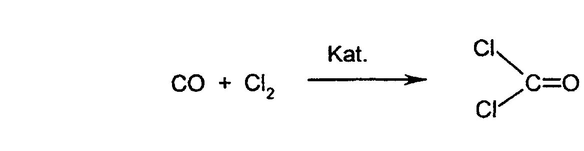

Als Katalysator wird meist Aktivkohle verwendet. Die Reaktion ist exotherm und der Umsatz nahezu vollständig. Es ist üblich, die Reaktion in mit Katalysator befüllten Rohrreaktorcn aus Normalstahl oder Edelstahl durchzuführen. Zum Abführen der Reaktionswärme werden die Rohre in der Regel von außen gekühlt. Je nach Verfahrensbedingungen enthält das nach diesem Verfahren hergestellte Phosgen mehr oder weniger große Mengen an Tetrachlorkohlenstoff (CCl₄) als Verunreinigung. Dieses wird durch unerwünschte Nebenreaktionen wie Disproprotionierungsreaktionen, Überchlorierung des Kohlenmonoxids, Chlorierung des Kohlenstoffkatalysators und Chlorierung von Methan (CH₄) gebildet. Der Verunreinigungsgrad des nach gängigen Verfahren hergestellten Phosgens durch Tetrachlorkohlenstoff liegt üblicherweise in einem Bereich von 250 bis 2000 ppm.

Die Bildung von Tetrachlorkohlenstoff als Nebenprodukt bei der Phosgenherstellung ist in vielerlei Hinsicht problematisch. So müssen wegen der Umweltunverträglichkeit von chlorierten Kohlenwasserstoffen kostspielige Vorkehrungen getroffen werden, die sicherstellen, daß der bei der Reaktion entstehende Tetrachlorkohlenstoff nicht an die Außenwelt abgegeben wird. Ferner wirken sich selbst geringe Gehalte an Tetrachlorkohlenstoff nachteilig auf einige, unter Verwendung von Phosgen hergestellte Produkte, insbesondere Kunststoffe, aus. Für die Herstellung von Polycarbonatkunststoffen wird beispielsweise hochreines Phosgen mit einem Tetrachlorkohlenstoffgehalt von höchstens 250 ppm benötigt, um Verfärbungen in dem normalerweise farblosen und durchsichtigen Endprodukt zu vermeiden.

In der JP 88-156040 wird ein Verfahren zur Herstellung von tetrachlorkohlenstoffarmem Phosgen durch Reaktion von Kohlenmonoxid mit Chlor über Aktivkohle bei 350°C beschrieben, in dem der Aktivkohlekatalysator vor der Reaktion durch Säurebehandlung von Verunreinigungen durch Übergangsmetalle, Bor, Aluminium und Silicium befreit wird. Das nach diesem Verfahren hergestellte Phosgen weist einen Tetrachlorkohlenstoffgehalt von 150 ppm auf. Nachteilig an diesem Verfahren ist jedoch die aufwendige Vorbehandlung des Aktivkohlekatalysators.

In der JP 80-014044 wird ein Reaktor zur Umsetzung von Chlor und Kohlenmonoxid zu Phosgen vorgeschlagen, in dem der Aktivkohlekatalysator an den Reaktorwänden mit Hilfe eines Metallnetzes angebracht ist. Durch diese Anordnung wird ein Überhitzen des Katalysatorbetts vermieden. Das in einem solchen Reaktor bei Temperaturen von 200 bis 250°C und einer Durchflußgeschwindigkeit von 600 bis 1200 l/h hergestellte Phosgen weist einen Tetrachlorkohlenstoffgehalt von 250 bis 400 ppm auf. Nachteilig an diesem Verfahren ist jedoch, daß eine Neubefüllung des Reaktors mit Aktivkohle bei Abfall der Aktivität im Vergleich zu herkömmlichen Rohrreaktoren erheblich mehr Aufwand erfordert.

Der Erfindung liegt die Aufgabe zugrunde, Phosgen mit einem noch geringeren Tetrachlorkohlenstoffgehalt bereitzustellen.

Gegenstand der Erfindung ist ein Verfahren zur Herstellung eines solchen Phosgens, in dem man Kohlenmonoxid mit Chlor in Gegenwart von elementarem Kohlenstoff bei einer Temperatur von 30 bis 80°C und einem Druck von 120 bis 400 kPa_{abs.}, gemessen unmittelbar hinter dem Phosgengenerator, umsetzt.

Vorteilhafterweise ist es zur Durchführung des erfindungsgemäßcn Verfahrens möglich, übliche Rohrreaktoren aus Normalstahl oder Edelstahl durchgeführt werden, dessen Rohre mit dem Kohlenstoffkatalysator gefüllt sind. Der Rohrreaktor kann kontinuierlich oder diskontinuierlich betrieben werden.

Kohlenmonoxid und Chlor werden zu etwa gleichen Teilen, vorzugsweise bei Raumtemperatur, in den Reaktor eingeführt. Um sicherzustellen, daß das gesamte Chlor umgesetzt wird, kann ein geringer Überschuß von Kohlenmonoxid verwendet werden. Vorzugsweise werden die beiden Reaktanden vor Eintritt in den Reaktor in einer geeigneten Mischvorrichtung, beispielsweise in einem statischen Mischer, vermischt.

Ein weiterer Vorteil des erfindungsgemäßen Verfahrens ist es, daß keine spezielle Vorbereitung des Katalysators erforderlich ist.

Der aus dem Reaktor austretende Gasstrom soll eine Temperatur von 70 bis 80°C, gemessen unmittelbar hinter dem Phosgengenerator, nicht überschreiten. Vorzugsweise beträgt die Temperatur des aus dem Reaktor austretenden Gasstroms im erfindungsgemäßen Verfahren 40 bis 70°C. Ein Überschreiten dieser Temperaturen wird mit Hilfe von entsprechenden Kühlvorrichtungen verhindert, welche die bei der Reaktion frei werdende Reaktionswärme abführen und ein Überhitzen des Katalysators verhindern.

Als Kohlenstoffkatalysator wird bevorzugt Aktivkohle eingesetzt. Vorzugsweise wird als Katalysator körnige Aktivkohle mit einem Korndurchmesser von 3 bis 4 mm verwendet. Die Porenoberfläche der Aktivkohle beträgt vorzugsweise etwa 1000 m²/g. Das Schüttgewicht der verwendeten Aktivkohle beträgt vorzugsweise etwa 450 g/l.

Der Druck gemessen unmittelbar hinter dem Phosgenreaktor beträgt vorzugsweise höchstens 300 kPa_{abs.}. Dadurch wird sichergestellt, daß Phosgen im Reaktor nicht kondensieren kann.

Das nach dem erfindungsgemäßen Verfahren hergestellte, am Kopf des Reaktors austretende Phosgen wird vorzugsweise bei Temperaturen von -10 bis -20°C kondensiert. Infolge seines geringen Tetrachlorkohlenstoffgehalts von weniger als 150 ppm kann es unmittelbar ohne weitere Reinigung zur Herstellung von Polymeren mit Carbonatbindung, insbesondere von Polycarbonaten oder Polyestercarbonaten, verwendet werden.

Das zur Umsetzung verwendete Chlor kann nach üblichen technischen Verfahren wie Chloralkali- oder Chlorwasserstoffelektrolyse hergestellt werden und sollte möglichst rein sein. Besonders geeignet ist Chlor mit einem Reinheitsgrad von mehr als 98 %. Vorzugsweise wird flüssiges Chlor aus einem Lagerbehälter verwendet, das in einem beheizten Vergaser verdampft und anschließend in einem Nachverdampfer von eventuell mitgerissenem, flüssigem Chlor befreit wird.

Das für die Umsetzung verwendete Kohlenmonoxid kann nach üblichen Verfahren, beispielsweise aus Erdgas/Naphtha in einer Synthesegasanlage oder aus Koks durch Blasen mit Sauerstoff hergestellt werden. Es hat sich als besonders vorteilhaft erwiesen, wenn das Kohlenmonoxid einen Methangehalt von weniger als 50 ppm aufweist.

Im folgenden wird die Erfindung durch Ausführungsbeispiele weiter erläutert.

### Beispiel 1

500 Nm³/h Kohlenmonoxid mit einer Reinheit von 97,5 % und einem Methangehalt von 50 ppm, gemessen durch eine On-Line-IR-Messung (Methode 2301-0207901-91 D), und 480 Nm³/h Chlor mit einer Reinheit von 99,9 % wurden bei Raumtemperatur gemischt und einem mit Aktivkohle (Korndurchmesser etwa 4 mm, Porenoberfläche etwa 1000 m²/g, Schüttgewicht etwa 450 g/l) gefüllten Phosgengenerator zugeführt. Der Generator wurde gekühlt, so daß die Temperatur des gebildeten Phosgens, gemessen unmittelbar nach Verlassen des Generators, 55°C betrug. Der Druck, gemessen unmittelbar nach Verlassen des Generators, betrug 80 kPa_{ü} (180 kPa_{abs}). Das hergestellte Phosgen wies einen Tetrachlorkohlenstoffgehalt von 100 ppm auf.

### Beispiel 2

500 Nm³/h Kohlenmonoxid mit einer Reinheit von 98 % und einem Methangehalt von 50 ppm, gemessen durch eine On-Line-IR-Messung (Methode 2301-0207901-91 D) und 480 Nm³/h Chlor wurden bei Raumtemperatur gemischt und einem mit Aktivkohle (Korndurchmesser etwa 4 mm, Porenoberfläche etwa 1000 m²/g, Schüttgewicht etwa 450 g/l) gefüllten Phosgengenerator zugeführt. Der Generator wurde gekühlt, so daß die Temperatur des gebildeten Phosgens, gemessen unmittelbar nach Verlassen des Generators, 40°C betrug. Der Druck, gemessen unmittelbar nach Verlassen des Generators, betrug 40 kPa_{ü} (140 kPa_{abs}). Das hergestellte Phosgen wies einen Tetrachlorkohlenstoffgehalt von 80 ppm auf.

### Vergleichsbeispiel

500 Nm³/h Kohlenmonoxid mit einer Reinheit von 98 %, einem Methangehalt von 10 ppm und 485 Nm³/h Chlor wurden bei Raumtemperatur gemischt und einem Phosgengenerator wie in den Beispielen 1 und 2 zugeführt. Der Generator wurde gekühlt, so daß die Temperatur des gebildeten Phosgens, gemessen unmittelbar nach Verlassen des Generators, 85°C betrug. Der Druck, gemessen ebenfalls unmittelbar nach Verlassen des Generators, betrug 600 kPa_{ü} (700 kPa_{abs}). Das hergestellte Phosgen wies einen Tetrachlorkohlenstoffgehalt von 290 ppm auf.

## Patentansprüche

1. Verfahren zur Herstellung von tetrachlorkohlenstoffarmem Phosgen durch Umsetzen von Kohlenmonoxid mit Chlor in Gegenwart von elementarem Kohlenstoff in einem Reaktor, **dadurch gekennzeichnet, daß** der aus dem Reaktor austretende Gasstrom eine Temperatur von 30 bis 80°C aufweist und unter einem Druck von 120 bis 400 kPa_{abs.}, gemessen unmittelbar hinter dem Phosgengenerator, steht.

2. Verfahren gemäß Anspruch 2, **dadurch gekennzeichnet, daß** der aus dem Reaktor austretende Gasstrom eine Temperatur von 40 bis 70°C aufweist.

3. Verfahren gemäß Anspruch 2 oder 3, **dadurch gekennzeichnet, daß** der aus dem Reaktor austretende Gasstrom unter einem Druck von höchstens 300 kPa_{abs.} steht.

4. Verfahren gemäß einem der Ansprüche 2 bis 4, **dadurch gekennzeichnet, daß** der Methangehalt des Kohlenmonoxids höchstens 50 ppm beträgt.

## Claims

1. A process for producing phosgene which is low in tetrachloride by the reaction of carbon monoxide with chlorine in the presence of elemental carbon in a reactor, **characterised in that** the gas stream emerging from the reactor is at a temperature of 30 to 80°C and is under a pressure of 120 to 400 kPa_{abs}. as measured directly downstream of the phosgene generator.

2. A process according to claim 2, **characterised in that** the gas stream emerging from the reactor is at a temperature of 40 to 70°C.

3. A process according to claim 2 or 3, **characterised in that** the gas stream emerging from the reactor is under a pressure of 300 kPa_{abs.} at most.

4. A process according to any one of claims 2 to 4, **characterised in that** the methane content of the carbon monoxide is 50 ppm at most.

## Revendications

1. Procédé de préparation de phosgène pauvre en tétrachlorure de carbone par réaction de monoxyde de carbone avec du chlore en présence de carbone élémentaire dans un réacteur, **caractérisé en ce que** le courant gazeux sortant du réacteur présente une température allant de 30 à 80°C et une pression allant de 120 à 400 kPa_{abs}, mesurée directement après le générateur de phosgène.

2. Procédé selon la revendication 1, **caractérisé en ce que** le courant gazeux sortant du réacteur présente une température allant de 40 à 70°C.

3. Procédé selon la revendication 1 ou 2, **caractérisé en ce que** le courant gazeux sortant du réacteur présente une pression d'au maximum 300 kPa_{abs}.

4. Procédé selon l'une quelconque des revendications 2 à 3, **caractérisé en ce que** la teneur en méthane du monoxyde de carbone s'élève à au maximum 50 ppm.
